# EUROPEAN PATENT SPECIFICATION

(11) **EP 4 391 875 B1**
(45) Date of publication and mention of the grant of the patent: **29.04.2026**
(21) Application number: 22772972.0
(22) Date of filing: 05.09.2022
(51) Int. Cl.: A47J 31/46, A47J 31/54

(54) **COFFEE MACHINE FOR PRODUCING A HOT AND COLD INFUSION**
KAFFEEMASCHINE ZUR HERSTELLUNG EINER HEISS- UND KALTINFUSION
MACHINE À CAFÉ POUR PRODUCTION D'INFUSIONS CHAUDE ET FROIDE

(30) Priority: 04.10.2021 IT 202100025415
(43) Date of publication of application: 03.07.2024
(60) Divisional application: 26154678.2
(73) Proprietor: De' Longhi Appliances S.r.l., 31100 Treviso (IT)
(72) Inventor: PANCIERA, Antonio, 31100 Treviso (IT); BENEDETTI, Alessandro, 31100 Treviso (IT); ROSETTA, Simone, 31100 Treviso (IT); ROSSETTO, Giovanni, 31100 Treviso (IT)
(74) Representative: Rapisardi, Mariacristina
(86) International application number: PCT/EP2022/074615
(87) International publication number: WO 2023/057146

(56) References cited:
- EP-A1- 0 676 163
- EP-B1- 2 524 635
- WO-A1-2011/145064
- US-A1- 2017 095 111

## Description

The present invention relates to a coffee machine for preparing a cold and hot coffee infusion.

It is known that traditional coffee machines particularly for domestic use are configured to produce a hot coffee infusion obtained by preliminarily making the infusion water transit from a boiler.

The most evolved machines associate with this function also the possibility to provide steam, for example for heating water in a cup for preparing a tea infusion.

With the evolution of users' tastes, cold coffee infusions are also becoming popular.

Therefore, the need has been perceived to redesign or adapt coffee machines, already rather complex in themselves, to offer the possibility of dispensing a cold coffee infusion, too.

In some cases, the preparation of a cold coffee infusion is possible by simply keeping the boiler deactivated during the activation of the infusion water supply pump.

In other cases the introduction of a boiler by-pass has been chosen where the infusion water is diverted in the case of a request for a cold coffee infusion.

Document EP 2 524 635 B1 relates to a coffee machine with a heater by-pass for preparing cold coffee.

The invention has the purpose of providing an alternative to known boiler by-pass systems within the context of a complex hydraulic circuit also including the function of steam production in addition to the function of cold and hot infusion water production.

Within the context of this technical task an object of the invention is to realise a coffee machine with high flexibility of use which can dispense as preferred a hot or cold infusion or steam through a simple but extremely functional hydraulic circuit.

The technical task, as well as these and other objects, according to the present invention are achieved by realising a coffee machine comprising a hydraulic circuit comprising an infuser, a water tank, a steam generator, a steam dispenser, a hot water generator, a supply pump for supplying water to the steam generator and to the hot water generator, characterised in that the hydraulic circuit further comprises a by-pass line of said hot water generator, a first and a second flow switcher which can be switched between a first switching configuration where said supply pump, said hot water generator and said infuser are connected in cascade, a second switching configuration where said supply pump and said infuser are connected in cascade through said bypass line of said hot water generator, and a third switching configuration where said supply pump and said steam generator are connected in cascade.

The first and second flow switcher comprise a first and a second three-way solenoid valve.

The by-pass line of the hot water generator connects the delivery of the supply pump to the infuser inlet.

In a preferred embodiment of the invention, said hydraulic circuit comprises a connection line between the delivery of the supply pump and the inlet of the hot water generator, a connection line between the delivery of the supply pump and the inlet of the steam generator, a connection line between the outlet of the hot water generator and the inlet of the infuser, a connection line between the outlet of the steam generator and the inlet of the steam dispenser.

In a preferred embodiment of the invention said hydraulic circuit comprises a discharge line for discharging the residual pressure in the infuser after dispensing.

In a preferred embodiment of the invention, said hydraulic circuit comprises a third flow switcher having a single inlet connected to the discharge line and to an outlet of the steam generator, a first outlet connected to the steam dispenser and a second outlet connected to a collection tank for collecting the discharge water of the infuser.

In a preferred embodiment of the invention said infuser has an infusion cylinder having a closed configuration for the infusion in which the discharge valve along the discharge line is closed, and an open configuration for discharging the residual pressure in which said discharge valve along the discharge line is open.

In a first embodiment of the invention said first flow switcher comprises a single inlet connected to the delivery of the pump, a first outlet connected to an inlet of said hot water generator and a second outlet connected to an inlet of the steam generator.

In a first embodiment of the invention said second flow switcher comprises a first inlet connected to an outlet of the hot water generator, a second inlet connected to a delivery of the pump along the by-pass line of the hot water generator, and a single outlet connected to an inlet of the infuser.

In a further embodiment of the invention said first flow switcher comprises a single inlet connected to a delivery of the pump, a first outlet connected to an inlet of said hot water generator and a second outlet connected to a single inlet of said second flow switcher.

In a further embodiment of the invention said second flow switcher comprises a first outlet connected to an inlet of said infuser along said by-pass line of the hot water generator and a second outlet connected to an inlet of the steam generator.

Further features and advantages of the invention will become more apparent from the description of a preferred, but not exclusive, embodiment of the coffee machine according to the invention, which is illustrated by way of approximate and non-limiting example in the attached drawings, of which:
figure 1 shows a diagram of a coffee machine in compliance with a first embodiment, where the flow switchers are in a suitable configuration for dispensing a cold coffee infusion;
figure 2 shows the diagram of the coffee machine of figure 1, where the flow switchers are in a suitable configuration for dispensing a hot coffee infusion;
figure 3 shows a diagram of the coffee machine of figure 1, where the flow switchers are in a suitable configuration for dispensing steam;
figure 4 shows a diagram of a coffee machine in compliance with a further embodiment, where the flow switchers are in a suitable configuration for dispensing a cold coffee infusion;
figure 5 shows the diagram of the coffee machine of figure 4, where the flow switchers are in a suitable configuration for dispensing a hot coffee infusion;
figure 6 shows a diagram of the coffee machine of figure 4, where the flow switchers are in a suitable configuration for dispensing steam;
figure 7 shows a simplified hydraulic circuit outside the subject-matter of the claims with which a performance method of a dispensing cycle of a cold or hot infusion can be implemented.

Equivalent parts shall be indicated in the following description with the same numerical reference.

With reference to the cited figures, a coffee machine is thus shown and indicated in its entirety by reference number 1.

The hydraulic circuit of the coffee machine 1 comprises an infuser 2, a water tank 3, a steam generator 4, a steam dispenser 5, a hot water generator 6, and a pump 7 for supplying water to the steam generator 4 and to the hot water generator 6.

In the illustrated solutions the steam generator 4 and the hot water generator 6 can be formed by instantaneous or storage boilers.

Between the supply pump 7 and the water tank 3 a flow meter 8 may be provided.

Between the supply pump 7 and the hot water generator 6 a pressure damper 9 may also be provided.

Advantageously, the hydraulic circuit of the coffee machine 1 comprises a by-pass line 10 of the hot water generator 6, a first flow switcher 12 and a second flow switcher 13.

The by-pass line 10 of the hot water generator 6 connects the delivery of the supply pump 7 to the infuser inlet 2.

The first flow switcher 12 and the second flow switcher 13 can be switched by the electronic controller of the coffee machine 1 between a first switching configuration where the supply pump 7, the hot water generator 6 and the infuser 2 are connected in cascade, a second switching configuration where the supply pump 7 and the infuser 2 are connected in cascade through the by-pass line 10 of the hot water generator 6, and a third switching configuration where the supply pump 7 and the steam generator 4 are connected in cascade.

The first flow switcher 12 comprises a first three-way solenoid valve.

The second flow switcher 13 comprises a second three-way solenoid valve.

The hydraulic circuit of the coffee machine 1 further comprises a discharge line 14 for discharging the residual pressure in the infusion chamber of the infuser 2 after dispensing.

Preferably the hydraulic circuit of the coffee machine 1 provides for a third flow switcher 15, particularly a three-way solenoid valve having a single inlet 16 connected to the discharge line 14 and to the outlet 17 of the steam generator 4, a first outlet 18 connected to the steam dispenser 5 and a second outlet 19 connected to a collection tank 20 for collecting the discharge water of the infuser 2 through a hydraulic line 42.

The hydraulic circuit of the coffee machine 1 further comprises a connection line 26 between the delivery of the supply pump 7 and the inlet of the hot water generator 6, a connection line 27 between the delivery of the supply pump 7 and the inlet of the steam generator 4, a connection line 28 between the outlet of the hot water generator 6 and the inlet of the infuser 2, a connection line 29 between the outlet of the steam generator 4 and the inlet of the steam dispenser 4.

The infuser 2 has a mechanical valve 11 having a discharge configuration in which it places in communication the infusion chamber with the discharge line 14, and an infusion configuration in which it places in communication the connection line 28 with the discharge line 14.

In the illustrated solutions, the infuser 2 provides for an open infusion cylinder 21 supported by the frame of the coffee machine 1 in a movable way between an engagement position with an overlying closing piston 22 for closing the open infusion chamber delimited by the infusion cylinder 21 and making the infusion, and a disengagement position of the overlying closing piston 22 for introducing a fresh load 23 of coffee powder or for extracting an exhausted load 23 of coffee powder 23.

The infusion cylinder 21 has a relevant dispensing section 24 for dispensing the infusion into a cup 25.

The movement of the infusion cylinder 21 for the typical closing is a motion comprising an initial rotatory component for the alignment of the axis thereof with the axis of the closing piston 22 and a final translational component for the coaxial engagement with the closing piston 22.

The closing piston 22 is in turn supported by the frame of the coffee machine 1 with the possibility of a brief axial oscillation from a position to which the discharge configuration of the mechanical valve 11 corresponds, which is assumed when it is disengaged from the infusion cylinder 21, to a position which corresponds to the infusion configuration of the mechanical valve 11, assumed due to the effect of the engagement with the infusion cylinder 21.

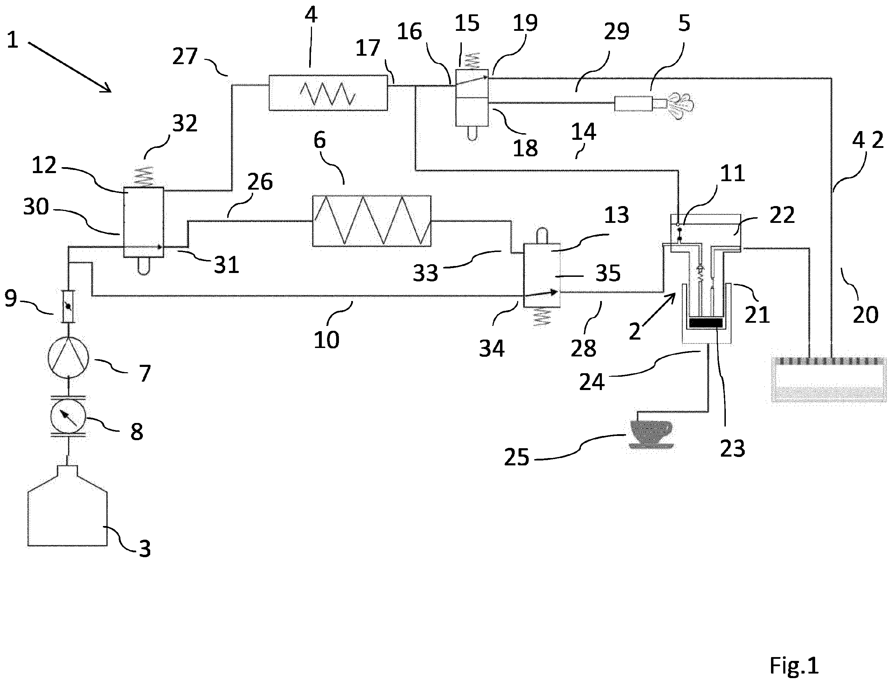

Reference is now made to the first embodiment of the invention illustrated in figures 1 - 3.

The first flow switcher 12 comprises a single inlet 30, connected to the delivery of the supply pump 7, a first outlet 31 connected to the inlet of the hot water generator 6 through the line 26 and a second outlet 32 connected to the inlet of the steam generator 4 through the line 27.

The second flow switcher 13 comprises a first inlet 33 connected to the outlet of the hot water generator 6, a second inlet 34 connected to the delivery of the supply pump 7 through the bypass line 10 of the hot water generator 6, and a single outlet 35 connected to the inlet of the infuser 2 through the line 28.

The operation of the hydraulic circuit of the coffee machine 1 is as follows.

For producing a cold coffee infusion the configuration of figure 1 of the flow switchers 12, 13 and 15 is used in which in the first flow switcher 12 the single inlet 30 is connected to the first outlet 31, in the second flow switcher 13 the second inlet 34 is connected to the single outlet 35, and in the third flow switcher 15 the single inlet 16 is connected to the second outlet 19.

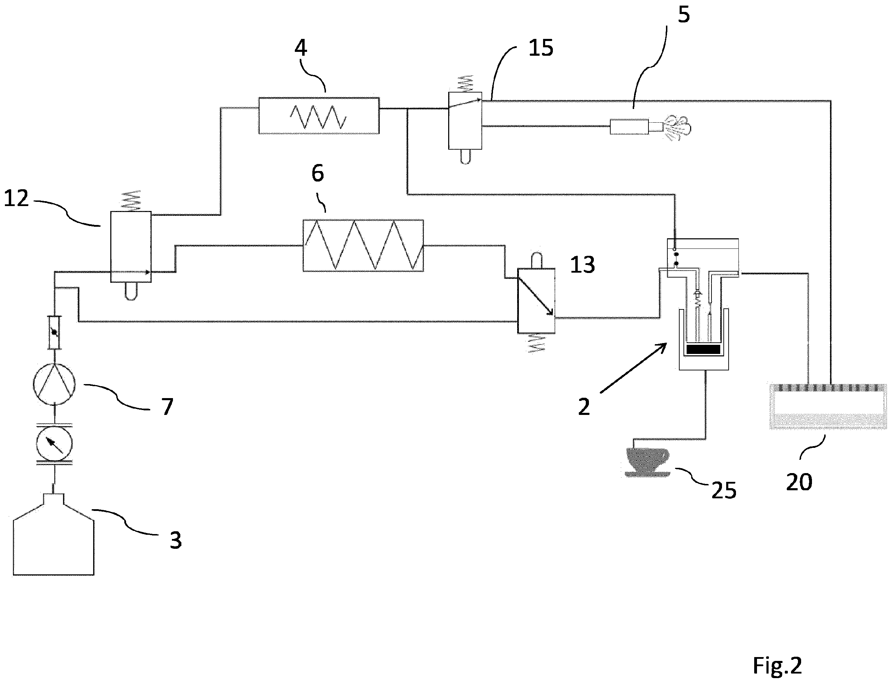

For producing a hot coffee infusion the configuration of figure 2 of the flow switchers 12, 13 and 15 is used in which in the first flow switcher 12 the single inlet 30 is connected to the first outlet 31, in the second flow switcher 13 the first inlet 33 is connected to the single outlet 35, and in the third flow switcher 15 the single inlet 16 is connected to the second outlet 19.

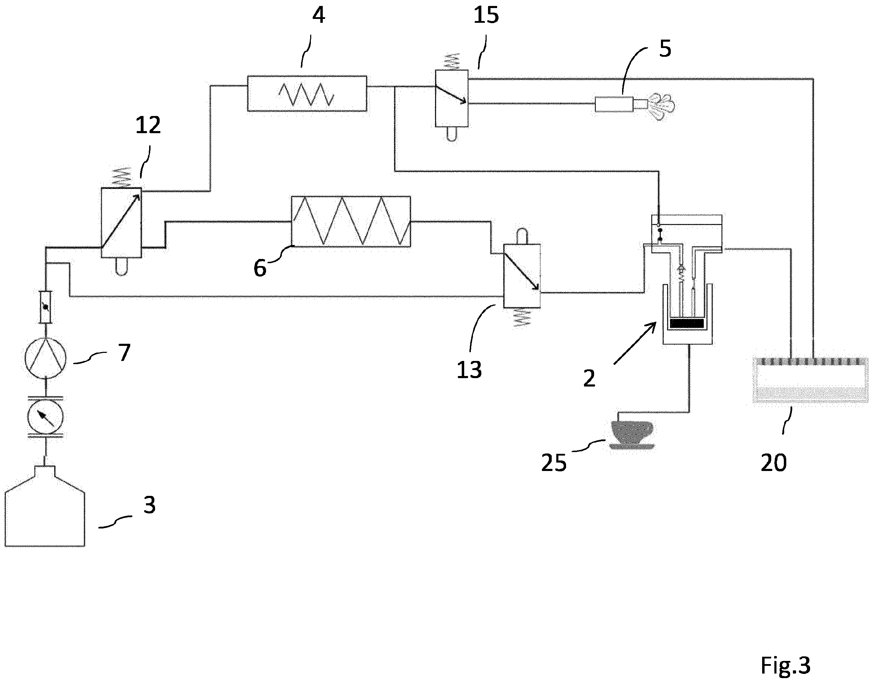

For producing steam the configuration of figure 3 of the flow switchers 12, 13 and 15 is used in which in the first flow switcher 12 the single inlet 30 is connected to the second outlet 32, in the second flow switcher 13 the first inlet 33 is connected to the single outlet 35, and in the third flow switcher 15 the single inlet 16 is connected to the first outlet 18.

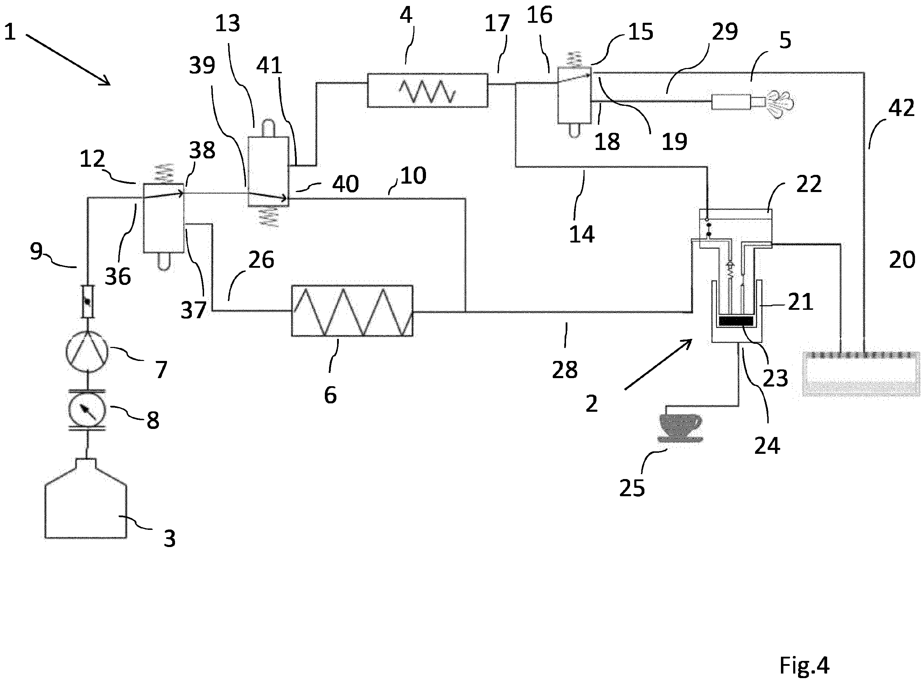

Reference is now made to the further embodiment of the invention illustrated in figures 4 - 6.

In this case the first flow switcher 12 comprises a single inlet 36 connected to the delivery of the supply pump 7, a first outlet 37 connected to the inlet of the hot water generator 6 through the line 26 and a second outlet 38 connected to a single inlet 39 of the second flow switcher 13.

The second flow switcher 13 comprises a first outlet 40 connected to the inlet of the infuser 2 through the by-pass line 10 of the hot water generator 6, and a second outlet 41 connected to the inlet of the steam generator 4 through the line 27.

The operation of the hydraulic circuit of the coffee machine 1 is as follows.

For producing a cold coffee infusion the configuration of figure 4 of the flow switchers 12, 13 and 15 is used in which in the first flow switcher 12 the single inlet 36 is connected to the second outlet 38, in the second flow switcher 13 the single inlet 39 is connected to the first outlet 40, and in the third flow switcher 15 the single inlet 16 is connected to the second outlet 19.

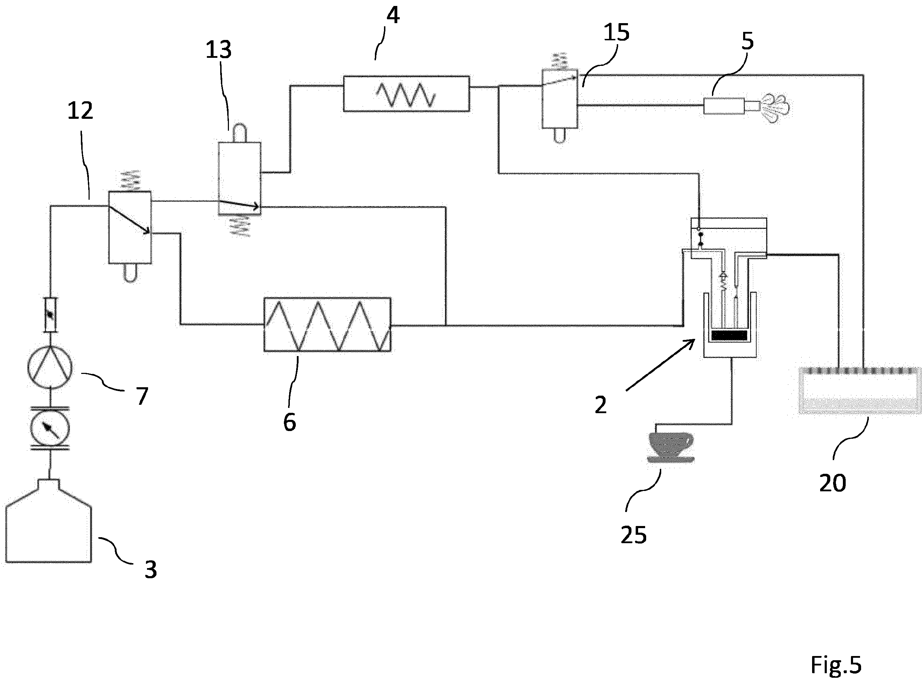

For producing a hot coffee infusion the configuration of figure 5 of the flow switchers 12, 13 and 15 is used in which in the first flow switcher 12 the single inlet 36 is connected to the first outlet 37, in the second flow switcher 13 the single inlet 39 is connected to the first outlet 40, and in the third flow switcher 15 the single inlet 16 is connected to the second outlet 19.

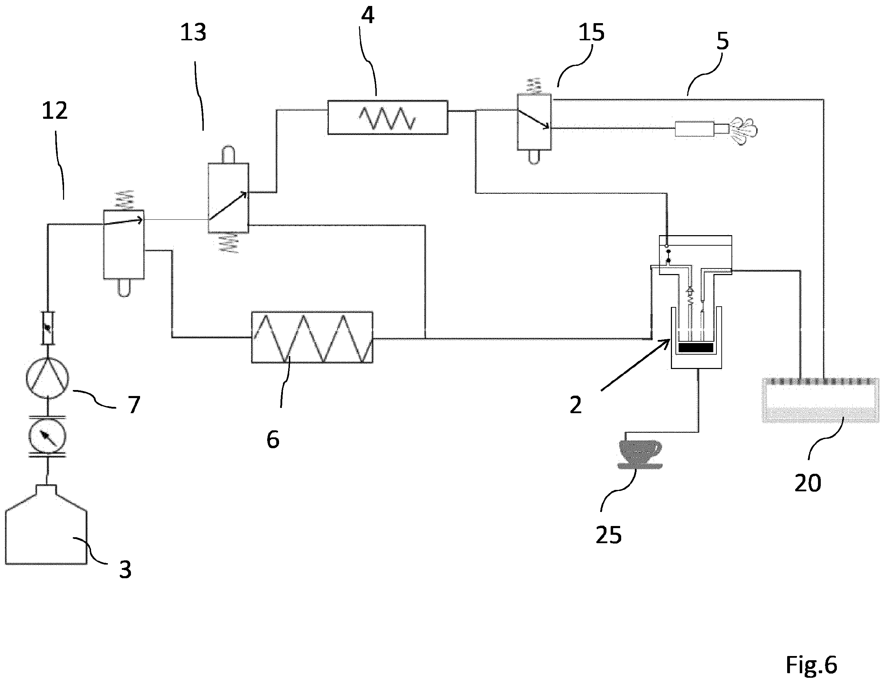

For producing steam the configuration of figure 6 of the flow switchers 12, 13 and 15 is used in which in the first flow switcher 12 the single inlet 36 is connected to the second outlet 38, in the second flow switcher 13 the single inlet 39 is connected to the second outlet 41, and in the third flow switcher 15 the single inlet 16 is connected to the first outlet 18.

When the infusion cylinder 21 is open, i.e. when the infuser 21 is not in the dispensing configuration, the connection line 28 is in communication with the discharge line as the mechanical valve 11 is open.

The solution illustrated in figures 1 - 3 may be preferred in order to prevent the undesired emptying of the hot water generator 6 when the infuser 2 is connected to the discharge line 14. In fact, in this implementation the first and the second flow switcher 12, 13 placed upstream and downstream of the hot water generator 6 may be positioned to close the inlet and the delivery of the hot water generator 6 thus guaranteeing that it is not emptied in an uncontrolled manner when the infuser 2 is connected to the discharge line 14 and every dispensing cycle can therefore always be performed with the same amount of infusion water; this also prevents the excess water for refilling the hot water generator 6 from quickly filling the tank 20, thus having to empty it continuously, which is not very appreciated by the user.

The solution illustrated in figures 4 - 6 has the advantage that the flow switchers 12, 13, in the form of three-way solenoid valves, are arranged along cold channels of the hydraulic circuit of the coffee machine and are therefore not exposed to the formation and accumulation of limescale deposits that could gradually obstruct the infusion water passage ways with the inevitable consequence of a reduction of the useful water flow to the infusion.

The present invention also discloses a method for preparing a cold infusion.

As is known, as soon as a traditional coffee machine is switched on the electronic controller of the coffee machine commands a step of pre-heating the hot water generator thus imposing a waiting time before the user can select the dispensing cycle.

During this pre-heating step the electronic controller keeps the supply pump deactivated and the hot water generator activated until the latter reaches a predetermined temperature.

Only upon reaching this predetermined temperature value does the electronic controller of the coffee machine enable the user to select the dispensing cycle and, once the selection has been made, it activates the supply pump in order to perform the selected dispensing cycle.

Instead, not encompassed by the wording of the claims, it is possible for the user to select on an interface with the coffee machine, for example a touch screen display or keypad, a dispensing cycle for preparing an infusion before the electronic controller possibly commands the pre-heating step.

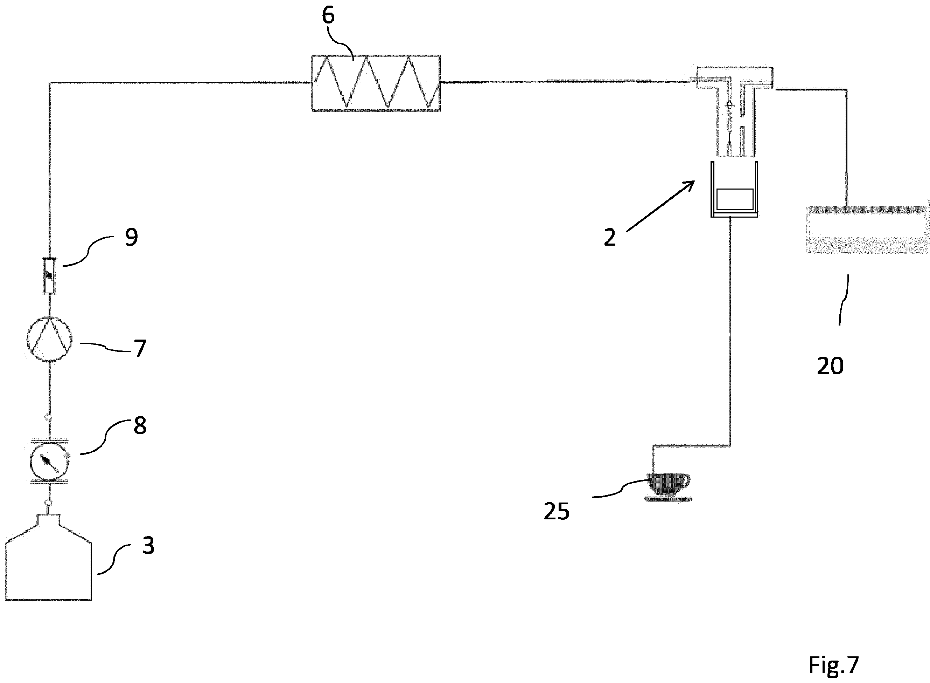

This innovative method for preparing an infusion, which can be implemented with a hydraulic circuit like those described above or even with a simpler hydraulic circuit such as the one illustrated in figure 7, solves the problem connected with the latent heat accumulated in the hot water generator 6 and the connected circuit, when a cycle is selected for dispensing a cold infusion after performing a hot infusion dispensing cycle.

This innovative method for preparing an infusion also prevents wasting electrical energy if a cold infusion is required as the pre-heating step is avoided.

Furthermore, with this innovative method which avoids the preheating step upon switching on the coffee machine if a cold infusion dispensing cycle is selected, the waiting time for having a cold infusion in the cup is shorter.

The performance of a dispensing cycle of a cold infusion can be commanded by the electronic controller of the coffee machine, in particular if the electronic controller is warned by a relevant hot water generator temperature sensor 6 of a lower hot water generator temperature 6 than a first threshold level T1, for example 50°C.

In particular, it may be envisaged that if the coffee machine, which is switched off after performing a hot infusion dispensing cycle, is switched on by the user by selecting a cold infusion dispensing cycle and the hot water generator 6 is at a lower temperature than the first threshold level T1 but higher than a second threshold level T2<T1, for example equal to 35°C, the electronic controller of the coffee machine activates a rinse of the hot water generator 6 with cold water that the supply pump 7 takes from the water tank 3 in order to cool down the hot water generator 6 to a temperature, less than T2, at which the electronic controller of the coffee machine can activate the dispensing cycle of a cold infusion selected by the user.

As mentioned, the hydraulic circuit illustrated in figure 7 is very simple, and envisages the performance of a cold infusion dispensing cycle in which the supply pump 7 is activated and the infusion water circulates through the hot water generator 6 which is kept deactivated.

The same control method can be applied to coffee machines with the circuits set out above where a by-pass of the hot water generator 6 is provided for the performance of a cold infusion dispensing cycle.

The coffee machine as conceived herein is susceptible to many modifications and variations, all falling within the scope of the inventive concept; further, all the details are replaceable by technically equivalent elements.

In practice, the materials used, as well as the dimensions, can be any according to the needs and the state of the art.

## Claims

1. A coffee machine (1) comprising a hydraulic circuit comprising an infuser (2), a water tank (3), a steam generator (4), a steam dispenser (5), a hot water generator (6), a supply pump (7) for supplying water to the steam generator (4) and to the hot water generator (6), the hydraulic circuit further comprising a by-pass line (10) of the hot water generator (6) connecting a delivery of the supply pump (7) to an inlet of the infuser (2), **characterized in that** it further comprises a first flow switcher (12) comprising a first three-way solenoid valve and a second flow switcher (13) comprising a second three-way solenoid valve which can be switched between a first switching configuration where said supply pump (7), said hot water generator (6) and said infuser (2) are connected in cascade, a second switching configuration where said supply pump (7) and said infuser (2) are connected in cascade through said by-pass line (10) of said hot water generator (6), and a third switching configuration where said supply pump (7) and said steam generator (4) are connected in cascade.

2. The coffee machine (1) according to the preceding claim, **characterised in that** said hydraulic circuit comprises a discharge line (14) for discharging the residual pressure in the infuser (2) after dispensing.

3. The coffee machine (1) according to the preceding claim, **characterised in that** said hydraulic circuit comprises a third flow switcher (15) having a single inlet connected to the discharge line (14) and to an outlet of the steam generator (4), a first outlet connected to the steam dispenser (5) and a second outlet connected to a collection tank (20) for collecting the discharge water of the infuser (2).

4. The coffee machine (1) according to the preceding claim, **characterised in that** said infuser (2) has an infusion cylinder (21) having a closed configuration for the infusion wherein a discharge valve (11) for discharging the pressure inside the infuser (2) is closed, and an open configuration for the introduction of a new load of coffee powder or for the extraction of a spent load of coffee powder wherein said discharge valve (11) is open.

5. The coffee machine (1) according to any preceding claim, **characterised in that** said hydraulic circuit comprises a connection line (26) between a delivery of the supply pump (7) and an inlet of the hot water generator (6), a connection line (27) between said delivery of the supply pump (7) and an inlet of the steam generator (4), a connection line (28) between an outlet of the hot water generator (6) and an inlet of the infuser (2), a connection line (29) between an outlet of the steam generator (4) and an inlet of the steam dispenser (5).

6. The coffee machine (1) according to the preceding claim, **characterised in that** said first flow switcher (12) comprises a single inlet (30) connected to the delivery of the supply pump (7), a first outlet (31) connected to the inlet of said hot water generator (6) and a second outlet (32) connected to the inlet of the steam generator (4).

7. The coffee machine (1) according to the preceding claim, **characterised in that** said second flow switcher (13) comprises a first inlet (33) connected to the outlet of the hot water generator (6), a second inlet (34) connected to the delivery of the supply pump (7) through the by-pass line (10) of the hot water generator (6), and a single outlet (35) connected to the inlet of the infuser (2).

8. The coffee machine (1) according to claim 5, **characterised in that** said first flow switcher (12) comprises a single inlet (36) connected to a delivery of the supply pump (7), a first outlet (37) connected to an inlet of said hot water generator (6) and a second outlet (38) connected to a single inlet (39) of said second flow switcher (13).

9. The coffee machine (1) according to the preceding claim, **characterised in that** said second flow switcher (13) comprises a first outlet (40) connected to an inlet of said infuser (2) through said by-pass line (10) of the hot water generator (6) and a second outlet (41) connected to an inlet of the steam generator (4).

10. The coffee machine (1) according to any one of claims 5 to 9, **characterised in that** said infuser (2) comprises a mechanical valve (11) having a discharge configuration in which it places in communication said infusion chamber with said discharge line (14), and an infusion configuration in which it places in communication said connection line (28) between an outlet of the hot water generator (6) and an inlet of the infuser (2) with said discharge line (14).

11. A control method for controlling a coffee machine (1) according to any preceding claim, **characterised in that** it dispenses a hot coffee infusion through the selection of said first switching configuration, it dispenses a cold coffee infusion through the selection of said second switching configuration, and it dispenses steam through the selection of said third switching configuration.

## Patentansprüche

1. Kaffeemaschine (1), umfassend einen Hydraulikkreislauf mit einer Brüheinheit (2), einem Wassertank (3), einem Dampferzeuger (4), einem Dampfauslass (5), einem Heißwassererzeuger (6), einer Förderpumpe (7) zur Zuführung von Wasser zum Dampferzeuger (4) und zum Heißwassererzeuger (6), wobei der Hydraulikkreislauf ferner eine Bypass-Leitung (10) des Heißwassererzeugers (6) umfasst, die einen Auslass der Förderpumpe (7) mit einem Einlass der Brüheinheit (2) verbindet, **dadurch gekennzeichnet, dass** er ferner einen ersten Strömungsumschalter (12) mit einem ersten Dreiwege-Magnetventil und einen zweiten Strömungsumschalter (13) mit einem zweiten Dreiwege-Magnetventil umfasst, die zwischen einer ersten Schaltkonfiguration, in der die Förderpumpe (7), der Heißwassererzeuger (6) und die Brüheinheit (2) in Reihe geschaltet sind, einer zweiten Schaltkonfiguration, in der die Förderpumpe (7) und die Brüheinheit (2) über die Bypass-Leitung (10) des Heißwassererzeugers (6) in Reihe geschaltet sind, und einer dritten Schaltkonfiguration, in der die Förderpumpe (7) und der Dampferzeuger (4) in Reihe geschaltet sind, umschaltbar sind.

2. Kaffeemaschine (1) nach dem vorhergehenden Anspruch, **dadurch gekennzeichnet, dass** der Hydraulikkreislauf eine Abflussleitung (14) zum Ablassen des Restdrucks in der Brüheinheit (2) nach der Ausgabe umfasst.

3. Kaffeemaschine (1) nach dem vorhergehenden Anspruch, **dadurch gekennzeichnet, dass** der Hydraulikkreislauf einen dritten Strömungsumschalter (15) umfasst, der einen einzigen Einlass aufweist, der mit der Abflussleitung (14) und mit einem Auslass des Dampferzeugers (4) verbunden ist, einen ersten Auslass, der mit dem Dampfauslass (5) verbunden ist, und einen zweiten Auslass, der mit einem Sammelbehälter (20) zum Sammeln des Abflusswassers der Brüheinheit (2) verbunden ist.

4. Kaffeemaschine (1) nach dem vorhergehenden Anspruch, **dadurch gekennzeichnet, dass** die Brüheinheit (2) einen Brühzylinder (21) aufweist, der eine geschlossene Konfiguration für den Brühvorgang besitzt, in der ein Abflussventil (11) zum Ablassen des Drucks innerhalb der Brüheinheit (2) geschlossen ist, und eine offene Konfiguration für das Einbringen einer neuen Portion Kaffeepulver oder für das Entfernen einer verbrauchten Portion Kaffeepulver, in der das Abflussventil (11) geöffnet ist.

5. Kaffeemaschine (1) nach einem der vorhergehenden Ansprüche, **dadurch gekennzeichnet, dass** der Hydraulikkreislauf eine Verbindungsleitung (26) zwischen einem Auslass der Förderpumpe (7) und einem Einlass des Heißwassererzeugers (6), eine Verbindungsleitung (27) zwischen dem Auslass der Förderpumpe (7) und einem Einlass des Dampferzeugers (4), eine Verbindungsleitung (28) zwischen einem Auslass des Heißwassererzeugers (6) und einem Einlass der Brüheinheit (2) sowie eine Verbindungsleitung (29) zwischen einem Auslass des Dampferzeugers (4) und einem Einlass des Dampfauslasses (5) umfasst.

6. Kaffeemaschine (1) nach dem vorhergehenden Anspruch, **dadurch gekennzeichnet, dass** der erste Strömungsumschalter (12) einen einzigen Einlass (30) aufweist, der mit dem Auslass der Förderpumpe (7) verbunden ist, einen ersten Auslass (31), der mit dem Einlass des Heißwassererzeugers (6) verbunden ist, und einen zweiten Auslass (32), der mit dem Einlass des Dampferzeugers (4) verbunden ist.

7. Kaffeemaschine (1) nach dem vorhergehenden Anspruch, **dadurch gekennzeichnet, dass** der zweite Strömungsumschalter (13) einen ersten Einlass (33) aufweist, der mit dem Auslass des Heißwassererzeugers (6) verbunden ist, einen zweiten Einlass (34), der über die Bypass-Leitung (10) des Heißwassererzeugers (6) mit dem Auslass der Förderpumpe (7) verbunden ist, und einen einzigen Auslass (35), der mit dem Einlass der Brüheinheit (2) verbunden ist.

8. Kaffeemaschine (1) nach Anspruch 5, **dadurch gekennzeichnet, dass** der erste Strömungsumschalter (12) einen einzigen Einlass (36) aufweist, der mit einem Auslass der Förderpumpe (7) verbunden ist, einen ersten Auslass (37), der mit einem Einlass des Heißwassererzeugers (6) verbunden ist, und einen zweiten Auslass (38), der mit einem einzigen Einlass (39) des zweiten Strömungsumschalters (13) verbunden ist.

9. Kaffeemaschine (1) nach dem vorhergehenden Anspruch, **dadurch gekennzeichnet, dass** der zweite Strömungsumschalter (13) einen ersten Auslass (40) aufweist, der über die Bypass-Leitung (10) des Heißwassererzeugers (6) mit einem Einlass der Brüheinheit (2) verbunden ist, und einen zweiten Auslass (41), der mit einem Einlass des Dampferzeugers (4) verbunden ist.

10. Kaffeemaschine (1) nach einem der Ansprüche 5 bis 9, **dadurch gekennzeichnet, dass** die Brüheinheit (2) ein mechanisches Ventil (11) umfasst, das eine Abflusskonfiguration aufweist, in der es die Brühkammer mit der Abflussleitung (14) verbindet, und eine Brühkonfiguration, in der es die Verbindungsleitung (28) zwischen dem Auslass des Heißwassererzeugers (6) und dem Einlass der Brüheinheit (2) mit der Abflussleitung (14) verbindet.

11. Steuerverfahren zum Steuern einer Kaffeemaschine (1) nach einem der vorhergehenden Ansprüche, **dadurch gekennzeichnet, dass** eine heiße Kaffeeinfusion durch Auswahl der ersten Schaltkonfiguration ausgegeben wird, eine kalte Kaffeeinfusion durch Auswahl der zweiten Schaltkonfiguration ausgegeben wird und Dampf durch Auswahl der dritten Schaltkonfiguration ausgegeben wird.

## Revendications

1. Machine à café (1) comprenant un circuit hydraulique comprenant un infuseur (2), un réservoir d'eau (3), un générateur de vapeur (4), un distributeur de vapeur (5), un générateur d'eau chaude (6), une pompe d'alimentation (7) destinée à alimenter en eau le générateur de vapeur (4) et le générateur d'eau chaude (6), le circuit hydraulique comprenant en outre une ligne de dérivation (10) du générateur d'eau chaude (6) reliant une sortie de la pompe d'alimentation (7) à une entrée de l'infuseur (2), **caractérisée en ce qu'**elle comprend en outre un premier commutateur de flux (12) comprenant une première électrovanne à trois voies et un second commutateur de flux (13) comprenant une seconde électrovanne à trois voies pouvant être commutées entre une première configuration de commutation dans laquelle ladite pompe d'alimentation (7), ledit générateur d'eau chaude (6) et ledit infuseur (2) sont connectés en cascade, une deuxième configuration de commutation dans laquelle ladite pompe d'alimentation (7) et ledit infuseur (2) sont connectés en cascade au moyen de ladite ligne de dérivation (10) dudit générateur d'eau chaude (6), et une troisième configuration de commutation dans laquelle ladite pompe d'alimentation (7) et ledit générateur de vapeur (4) sont connectés en cascade.

2. Machine à café (1) selon la revendication précédente, **caractérisée en ce que** ledit circuit hydraulique comprend une ligne d'évacuation (14) destinée à évacuer la pression résiduelle dans l'infuseur (2) après la distribution.

3. Machine à café (1) selon la revendication précédente, **caractérisée en ce que** ledit circuit hydraulique comprend un troisième commutateur de flux (15) ayant une entrée unique reliée à la ligne d'évacuation (14) et à une sortie du générateur de vapeur (4), une première sortie reliée au distributeur de vapeur (5) et une seconde sortie reliée à un réservoir de collecte (20) destiné à recueillir l'eau d'évacuation de l'infuseur (2).

4. Machine à café (1) selon la revendication précédente, **caractérisée en ce que** ledit infuseur (2) comprend un cylindre d'infusion (21) ayant une configuration fermée pour l'infusion dans laquelle une vanne d'évacuation (11) destinée à évacuer la pression à l'intérieur de l'infuseur (2) est fermée, et une configuration ouverte pour l'introduction d'une nouvelle dose de café en poudre ou pour l'extraction d'une dose usagée de café en poudre dans laquelle ladite vanne d'évacuation (11) est ouverte.

5. Machine à café (1) selon l'une quelconque des revendications précédentes, **caractérisée en ce que** ledit circuit hydraulique comprend une ligne de connexion (26) entre une sortie de la pompe d'alimentation (7) et une entrée du générateur d'eau chaude (6), une ligne de connexion (27) entre ladite sortie de la pompe d'alimentation (7) et une entrée du générateur de vapeur (4), une ligne de connexion (28) entre une sortie du générateur d'eau chaude (6) et une entrée de l'infuseur (2), et une ligne de connexion (29) entre une sortie du générateur de vapeur (4) et une entrée du distributeur de vapeur (5).

6. Machine à café (1) selon la revendication précédente, **caractérisée en ce que** le premier commutateur de flux (12) comprend une entrée unique (30) reliée à la sortie de la pompe d'alimentation (7), une première sortie (31) reliée à l'entrée dudit générateur d'eau chaude (6) et une seconde sortie (32) reliée à l'entrée du générateur de vapeur (4).

7. Machine à café (1) selon la revendication précédente, **caractérisée en ce que** le second commutateur de flux (13) comprend une première entrée (33) reliée à la sortie du générateur d'eau chaude (6), une seconde entrée (34) reliée à la sortie de la pompe d'alimentation (7) par l'intermédiaire de la ligne de dérivation (10) du générateur d'eau chaude (6), et une sortie unique (35) reliée à l'entrée de l'infuseur (2).

8. Machine à café (1) selon la revendication 5, **caractérisée en ce que** le premier commutateur de flux (12) comprend une entrée unique (36) reliée à une sortie de la pompe d'alimentation (7), une première sortie (37) reliée à une entrée dudit générateur d'eau chaude (6) et une seconde sortie (38) reliée à une entrée unique (39) dudit second commutateur de flux (13).

9. Machine à café (1) selon la revendication précédente, **caractérisée en ce que** le second commutateur de flux (13) comprend une première sortie (40) reliée à une entrée dudit infuseur (2) par l'intermédiaire de ladite ligne de dérivation (10) du générateur d'eau chaude (6) et une seconde sortie (41) reliée à une entrée du générateur de vapeur (4).

10. Machine à café (1) selon l'une quelconque des revendications 5 à 9, **caractérisée en ce que** ledit infuseur (2) comprend une vanne mécanique (11) ayant une configuration d'évacuation dans laquelle elle met en communication la chambre d'infusion avec la ligne d'évacuation (14), et une configuration d'infusion dans laquelle elle met en communication ladite ligne de connexion (28) entre la sortie du générateur d'eau chaude (6) et l'entrée de l'infuseur (2) avec ladite ligne d'évacuation (14).

11. Procédé de commande pour commander une machine à café (1) selon l'une quelconque des revendications précédentes, **caractérisé en ce qu'**il délivre une infusion de café chaud par la sélection de ladite première configuration de commutation, délivre une infusion de café froid par la sélection de ladite seconde configuration de commutation et délivre de la vapeur par la sélection de ladite troisième configuration de commutation.
